# EUROPEAN PATENT APPLICATION

(11) **EP 0 753 722 A2**
(43) Date of publication of application: **15.01.1997**
(21) Application number: 96304999.4
(22) Date of filing: 05.07.1996
(51) Int. Cl.: G01F 23/292

(54) **Monitoring system for liquid level control**

(30) Priority: 08.07.1995 GB 9513975
(71) Applicant: HUSSMANN (EUROPE) LIMITED, Kinning Park, Glasgow G41 1BS, Scotland (GB)
(72) Inventor: Cotter Dennis,, Newmiln, Ayrshire, KA16 9JH (GB); Graeme Ogilvie,, Lenzie, Glasgow, G66 4UG (GB); Stevenson Richard,, Leeds. LS16 7HQ, (GB)
(74) Representative: Jones, Andrée Zena

(57) **Abstract**

The invention relates to a monitoring system for maintaining liquid levels in a system, for example lubricant levels desirable for operation of apparatus for instance compressor means (2) of a refrigeration circuit. The system can therefore detect an unacceptably low level in a chamber supplying oil to a compressor (2), in the casing of which is provided a transparent sight glass (18). A source of, say, infra-red light (20) projects a beam (22) into the glass panel (18) where it is incident on the rear surface (24) of the glass at a trigger level (26), i.e. a level at which a valve (16) operates to allow additional oil to be supplied to the chamber within the casing. An arrangement of two light source-detector devices can be set up to monitor an upper and lower oil level between which is a "dead" range intended to avoid valve solenoid "flutter".

## Description

The invention is concerned with improvements in or relating to a monitoring and control system for maintaining liquid levels in a liquid-containing system.

In a situation in which it is necessary to monitor the level of, for example, lubricant in a compressor of a refrigeration system, it is preferable to carry out this requirement externally of the casing of the compressors thus avoiding the use of invasive, mechanical, oil level monitoring devices. Such an approach is particularly desirable with the new classes of refrigerant and oils now in use.

It is also desirable to provide a monitoring and control system which may be used with compressors that do not have a positive oil displacement and may be used so as to obviate the need for an oil pressure differential safety switch.

The invention therefore provides in one of its several aspects, a monitoring system for use in monitoring a liquid level in a unit, said unit having a casing provided with a radiation-transparent panel, means for emitting radiation in a beam passing from the exterior of the casing through the panel and radiation detecting means for detecting and indicating either the presence or at least substantial absence of a return beam of said radiation reflected from a rear surface of said panel.

It will be understood that the term radiation is used to encompass any suitable portion of the electromagnetic spectrum.

Preferably, said panel may comprise a sight glass.

Advantageously, said radiation emitting means may be a source of infra-red or visible light. Conveniently said means for detecting a reflected beam of said radiation may be a photo-transistor device mounted adjacent said radiation emitting device on converging optical axes.

In an example to be described below, an infra-red light emitting diode is arranged to pass a beam through the sight glass of a compressor casing. When the oil level falls below the region of the sight glass upon which the beam is incident, which is situated at the minimum desirable operating oil level of the unit, the beam of light is reflected from the inner surface of the sight glass back to the photo-transistor device which registers the presence of the reflected beam. However, in normal use when the oil level is above the region of the sight glass upon which the beam is incident, the light beam passes into and through the oil, very little reflection taking place back to the photo-transistor device.

Preferably, the reflection detecting means may have an optimum reflection detecting range approximately equal to the thickness of the glass or similar material in the sight glass panel.

In the example mentioned above, the presence of a reflected beam is registered and a signal produced and transmitted to an oil control valve. Advantageously, a non-actuating condition or "dead-band" is defined in an appropriate switching circuit to prevent unnecessarily frequent operation of the valve, which may be a solenoid valve. Advantageously, therefore, the reflection detecting means may comprise optical sensor devices at more than one level.

Preferably, a timer device may be provided together with an alarm device operable after a pre-determined period of time during which the oil-level is registered as being lower than required.

According to the present invention in a further aspect thereof, there is provided a monitoring system for controlling the level of a liquid within a chamber defined by a casing, the system comprising a valve through which liquid is supplied to the chamber, a radiation-transparent panel or panels provided in the casing, at least one radiation source/detector arrangement arranged to direct a beam of radiation onto a pre-determined region of the panel or one of the panels and to detect reflected radiation, the amount of radiation reflected by the or each panel being dependent upon whether or not liquid is present in contact with a rear surface of the panel, and control means for receiving the outputs from the detector, said control means being arranged to open the valve only when the detector outputs correspond to a liquid level below the region and to close the valve only when the detector outputs correspond to a liquid level above the region.

Advantageously, there may be provided first and second radiation source/detector arrangements adapted to emit respective beams of radiation onto regions of said panel(s) which are vertically spaced apart in horizontal planes passing through the panel(s) and to detect reflected radiation, said control means being arranged to receive the outputs from said first and said second source/detector arrangements and to open the valve only when the detector outputs correspond to a liquid level below the lower one of said vertically spaced regions and to close the valve only when the detector outputs correspond to a liquid level above the upper one of said regions.

Various arrangements which may be found suitable include providing one radiation source/detector arrangement disposed on a first panel and a further radiation source/detector arrangement disposed on a second panel provided at a lower level in the casing, or providing both arrangements in the same panel.

There will now be described examples of systems according to the invention. It will be understood that the description which is to be read with reference to the drawings, is given by way of example only and not by way of limitation.

In the drawings:
Figure 1 is a block diagram of a portion of the circuitry of a refrigeration plant including a plurality of compressor units each controlled by a device according to the invention;
Figure 2 is a diagrammatic representation of the operating principle of a first embodiment of the invention;
Figure 3 is a diagrammatic representation of the operating principle of a second embodiment of the invention; and
Figure 4 is a circuit diagram of an example of circuitry for use with the embodiment.

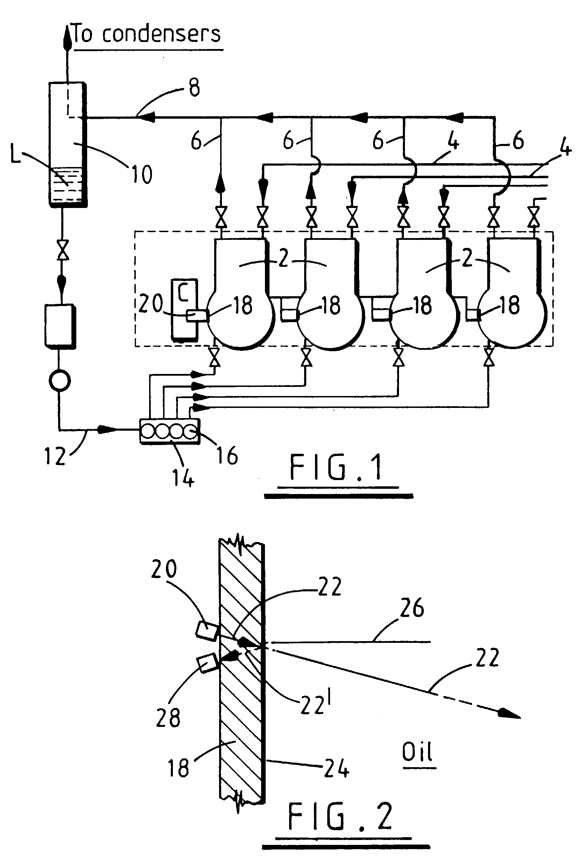

Figure 1 shows a portion of a refrigeration circuit comprising evaporator and condenser means forming no part of this invention, together with a bank of compressors 2 receiving circulating refrigerant vapour from an evaporator arrangement through lines 4 and providing high pressure vapour to a condenser arrangement through branch lines 6 off line 8.

Line 8 passes through a separator 10 from which lubricant (oil L) is separated and returned to the compressors 2 via a line 12 to a manifold device 14 adapted to control an array of solenoid valves 16, each adapted to operate to maintain an adequate supply of oil to a desired operating level in a respective compressor 2.

However, it is necessary to monitor the level of oil present within the compressor casing so as to provide additional oil should the level fall below a desired minimum below which, if compressor operation continued, damage to the compressors may result.

It is therefore advantageous to provide the facility to monitor and control the level of oil in each compressor 2. To this end, each compressor is provided with a radiation trans- parent panel 18 in the form of a sight glass. In the example the panel is of plain glass and is transparent to infra-red light.

A source of infra-red light, a light emitting diode 20, Figure 2, projects a beam 22 into the sight glass 18 where it is incident on the rear surface 24 of the glass at a "valve trigger" level 26. An optical sensor 28 which is arranged side-by-side with the source 20, and has an operating axis which converges with that of the source within the thickness of the glass 18 so as to receive a beam of light 22' reflected from the sight glass.

For the sake of clarity in Figure 2 the source 20 and the sensor 28 are shown as spaced apart vertically. However, it will be understood that an alternative arrangement may be one in which the source 20 and sensor 28 lie in the same horizontal plane, or spaced from one another both vertically and horizontally.

In the present example, when oil is present within the compressor casing up to the valve trigger level 26, the lightbeam encounters a glass-oil interface where the refractive index changes from a low value in the glass to a high value in the oil. The major fraction of the light beam thus passes through the interface into the oil with only a relatively small fraction being reflected back through the sight glass. When no oil is present up to the valve trigger level 26, indicating that the oil level has dropped to an unacceptably low level, the light beam passes through the sight glass and encounters a glass-air interface, i.e. a change from a high refractive index medium to a low refractive index medium. Providing that the light is incident upon the rear surface 24 at an angle greater than the critical angle, the beam 22 is reflected by the rear surface 24 of the glass 18 and is detected by the optical sensor 28.

The sensor 28 is then activated to produce a signal so that the respective solenoid valve 16 may be caused to open and to supply additional oil to the compressor 2 until the oil level rises above the valve trigger level 26 at which the absence of a beam 22' at the sensor 28 is established.

Whilst the arrangement of Figure 2 may be satisfactory for certain applications, it may result in unnecessarily frequent operation of the solenoid valve 16 where the oil level is likely to fluctuate above and below the valve trigger level, e.g. where bubbles form in the oil or where vibration causes the compressor casing to vibrate. Solenoid "chatter" as it is known can result in the solenoid burning out after a relatively short period of operation.

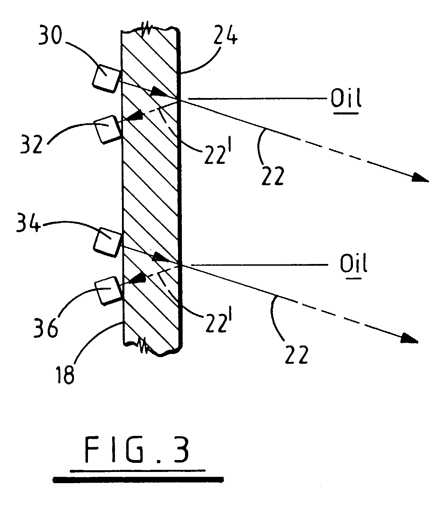

In order to prevent solenoid chatter, the arrangement illustrated diagrammatically in Figure 3 is employed. In this Figure also, the sources and sensors are shown vertically spaced apart, whereas a layout in which convergence is in a horizontal plane may be preferred in some circumstances.

The system comprises an upper infra-red light source/sensor arrangement 30,32, similar to that described above with reference to Figure 2, to detect when the oil level rises above, or falls below, an upper 'oil' level and a further lower infra-red light source/sensor arrangement 34,36 to detect when the oil level falls below, or rises above, a lower 'no oil' level. The two arrangements are spaced apart in the present example so that the distance between the 'oil' and the 'no oil' level is approximately 7mm.

Control circuitry C (described in detail below) monitors the output signals from the two optical sensors 32,36. As the oil level falls from an initial high level, the output from the upper sensor 32 first changes from low to high whilst that from the lower sensor 36 remains low. In this state the solenoid valve 16 is maintained closed by the control circuitry. Only when the output from the lower sensor 36 also changes from low to high, indicating that the oil level has fallen below the 'no oil' level, does the control circuitry open the solenoid value 16, causing the chamber to begin filling with oil. As the oil level rises, the output from the lower sensor 36 first changes from high to low, followed by the output from the upper sensor 32. Only when the outputs from both sensors 32,36 have changed from high to low does the control circuitry close the solenoid value 16, cutting off the supply of oil to the chamber. The control circuitry therefore introduces a hysteresis loop into the switching of the solenoid valve 16 which prevents small fluctuations of the oil level giving rise to solenoid chatter.

It will be understood that in the event of damage occurring to the light source sensor unit, which may as a result become dislodged and fail to monitor the fall in level, a pressure pad (not shown) is provided in association with the unit which, if the unit becomes dislodged, is arranged to send a signal to the compressor to stop its operation so as to prevent the risk of serious damage thereto.

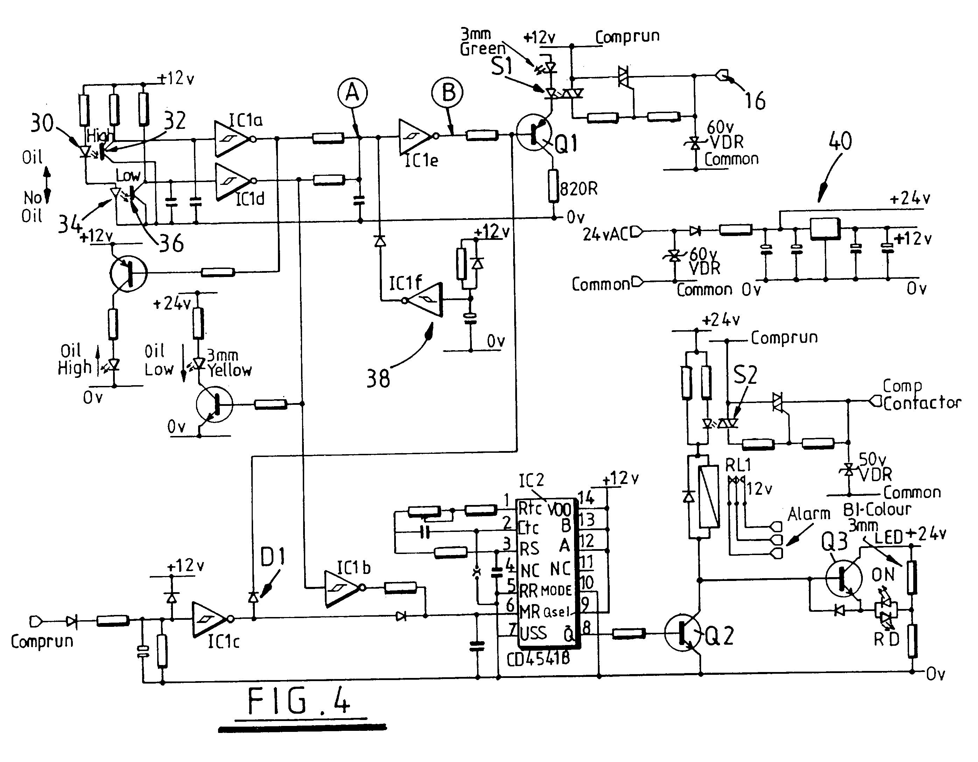

Figure 4 shows in detail control circuitry for use with the system of Figure 3, where the panel 18, through which light may be reflected from the sources 30, 34 to the detectors 32, 36, is omitted for the sake of clarity. The outputs provided by the sensors 32,36 (photo-transistors) are supplied by way of respective filter capacitors and inverting schmitt triggers IC1a, IC1d, which act to sharpen the switching signals generated by the detectors, to a common summing junction A which provides the input to a further schmitt trigger IC1e. The outputs of the schmitt triggers IC1a,IC1d are low (0v) when the sensors 32,34 receive no reflected light and are high (6v) when the contrary is true. The third schmitt trigger IC1e is arranged, when the voltage at A is increasing, to provide a high output when that voltage rises above 9v and, when the voltage at A is falling, to provide a low output when that voltage falls below 3v thus providing a dead band of 6v such that a change in the output of only one of the schmitt triggers IC1a, IC1d will not produce a change in the output of schmitt trigger IC1e.

The output from schmitt trigger IC1e is coupled to the base of a pnp transistor Q1 which has its collector coupled to a pair of light emitting diodes. A first of these diodes provides a visual indicator whilst the second forms part of an optically isolated switch S1 which controls the power supply to the solenoid valve 16. When the output from the schmitt trigger IC1e is high, indicating that the oil level is above the 'no oil' level, the transistor Q1 remains off, as does the optically isolated switch S1. The solenoid valve 16 is in turn closed and no oil is supplied to the compressor 2.

When the oil level falls below the 'no oil' level, the output from the schmitt trigger IC1e goes low, turning on the transistor Q1 and the optically isolated switch S1 and opening the solenoid valve 16. The solenoid valve is maintained in the open state until such time as the oil level rises above both the 'no oil' and 'oil' levels and the output from the schmitt trigger goes low.

In order to provide a visual indication of the level of oil present in the compressor 2, the outputs from the schmitt triggers IC1a and IC1d are provided to respective 'oil high' and 'oil low' yellow indicator diodes. A first of the diodes is on only when the oil level is above the 'oil' level whilst the second diode is on only when the level falls below the 'no oil' level. When the oil level is in the deadband between these two levels, neither diode is on.

Whilst the control circuitry is generally continuously powered-up, the compressor 2 itself is turned on and off under the control of a refrigerator thermostat or the like. In order to prevent the solenoid value from being needlessly operated when the compressor is off, a 'COMPRUN' signal, indicative of the state of the compressor, is supplied to a schmitt trigger IC1e after rectification. When the COMPRUN signal is low, indicating that the compressor is off, the output from the schmitt trigger IC1c is high, acting through a diode D1 to hold the transistor Q1 in an off state and thus holding the solenoid value 16 closed. When the COMPRUN signal is high, indicating that the compressor is running, the output from schmitt trigger IC1c is low, allowing the transistor Q1 to be controlled by the output from schmitt trigger IC1e.

A further circuit portion indicated generally by reference numeral 38 is arranged, when the system is being commissioned and power is first applied to the circuit, to temporarily force the output of the schmitt trigger IC1e low, turning on the solenoid valve 16 and thus preventing the oil level from possibly sticking between the 'oil' and the 'no oil' levels.

The control circuitry is provided with a timer IC2 which receives at its start/stop input the output from a schmitt trigger IC1b which in turn receives as its input the output from schmitt trigger IC1d, coupled to the 'no oil' detector.

The output from the timer IC2 is supplied via a transistor Q2 and a relay RL1 to an optically isolated switch S2. The switch S2 controls the supply of power to the compressor 2. In normal operation, the output from the timer causes the switch S2 to couple power to the compressor. When the output from schmitt trigger IC1d goes low, indicating that the oil level has dropped below the 'no oil' level, the timer commences counting. If the timer is allowed to run for four minutes without receiving a stop input from the schmitt trigger IC1d (i.e. a low output therefrom indicating that the oil level has risen above the 'no oil' level), the timer output is toggled and the switch S2 shuts off power to the compressor, thus preventing the compressor from running for a prolonged period without sufficient oil. The timer output is also coupled to green and red LEDS which provide a visual indication of whether or not the compressor is running.

Schmitt trigger IC1c is also arranged to over-ride the start/stop signal provided to the timer IC2 by the schmitt trigger IC1d when the compressor is not running and the COMPRUN signal is low, so as to maintain the timer in the stop state.

The circuit indicated generally by reference numeral 40 in Figure 4 illustrates the power supply for the control circuitry.

Various modifications may be made within the scope of the invention as defined in the following claims.

## Claims

1. A monitoring system for use in monitoring a liquid level in a unit, said unit having a casing provided with a radiation-transparent panel, means for emitting radiation in a beam passing from the exterior of the casing through the panel and radiation detecting means for detecting and indicating either the presence or at least substantial absence of a return beam of said radiation reflected from a rear surface of said panel.

2. A monitoring system for controlling the level of a liquid within a chamber defined by a casing, the system comprising a valve through which liquid is supplied to the chamber, a radiation-transparent panel or panels provided in the casing, at least one radiation source/detector arrangement arranged to direct a beam of radiation onto a pre-determined region of the panel or one of the panels and to detect reflected radiation, the amount of radiation reflected by the or each panel being dependent upon whether or not liquid is present in contact with a rear surface of the panel, and control means for receiving the outputs from the detector, said control means being arranged to open the valve only when the detector outputs correspond to a liquid level below the region and to close the valve only when the detector outputs correspond to a liquid level above the region.

3. A system as claimed in claim 2 wherein there are provided first and second radiation source/detector arrangements adapted to emit respective beams of radiation onto regions of said panel(s) which are vertically spaced apart in horizontal planes passing through the panel(s) and to detect reflected radiation, said control means being arranged to receive the outputs from said first and said second source/detector arrangements and to open the valve only when the detector outputs correspond to a liquid level below the lower one of said vertically spaced regions and to close the valve only when the detector outputs correspond to a liquid level above the upper one of said regions.

4. A system as claimed in claim 3 wherein said first and second radiation source/detector arrangements are provided one on each of two panels, said panels being provided at an upper and a lower level respectively in the casing.

5. A system as claimed in any one of the preceding claims wherein means are provided to indicate interruption of a radiation beam from the source due to dislodgement of the arrangement from its associated panel, said means being arranged to produce a stop signal to apparatus the operation of which is dependent upon the presence of said liquid in the chamber in an adequate quantity.

6. A monitoring system as claimed in any one of the preceding claims in combination with a refrigeration circuit comprising compressor means receiving refrigerant vapour from elsewhere in said refrigeration circuit.

7. A system and circuit as claimed in claim 6 wherein said chamber is adapted to be charged with lubricant to a desired operating level or a range of levels to be supplied to said compressors.

8. A system and circuit as claimed in claim 7 insofar as it is dependent on claim 5, wherein the stop signal is received by said compressor means of the refrigeration circuit.
